# FASCICULE DE BREVET EUROPEEN

(11) **EP 0 908 997 B1**
(45) Date de publication et mention de la délivrance du brevet: **13.12.2006**
(21) Numéro de dépôt: 98402320.0
(22) Date de dépôt: 21.09.1998
(51) Int. Cl.: H02G 15/103, H02G 15/115

(54) **Dispositif de protection étanche pour une jonction de câbles haute tension**
Abgedichtete Schutzvorrichtung für Hochspannungskabelverbindung
Sealed protection device for high voltage cable connection

(30) Priorité: 07.10.1997 FR 9712511
(43) Date de publication de la demande: 14.04.1999
(73) Titulaire: Nexans, 75008 Paris (FR)
(72) Inventeur: Laurent, Michel, 1110 Morges (CH); Hahn, Heinz, 1110 Morges (CH)
(74) Mandataire: Feray, Valérie

(56) Documents cités:
- EP-A- 0 225 784
- EP-A- 0 475 561
- EP-A- 0 780 949
- DE-A- 1 465 809
- US-A- 1 723 846
- US-A- 4 110 550

## Description

La présente invention concerne un dispositif de protection étanche pour une jonction de câbles haute tension, comportant au moins une structure tubulaire métallique et au moins une gaine isolante extérieure

On connaît déjà des dispositifs de protection de ce type comportant des enveloppes faites de nombreuses pièces que l'opérateur doit assembler sur le lieu du montage du câble. Ces pièces comprennent des tubes en cuivre ou en plomb que l'opérateur doit souder ou visser ensemble, des bagues en laiton, en bronze ou en matière isolante, des joints toriques ou plats, des boîtiers en résine époxy-fibre de verre, du matériel de connexion, de visserie, des gaines thermorétractables, du mastic ainsi qu'une grande quantité de matière de remplissage à couler sur place.

Ces enveloppes sont onéreuses, difficiles à monter et leur étanchéité dépend principalement de l'habileté du monteur.

La présente invention se propose de remédier à ces divers inconvénients en réalisant un dispositif de protection pour une jonction de câbles haute tension, constitué d'un minimum d'éléments, qui sont entièrement préfabriqués en usine.

La préfabrication permet un contrôle sévère, tant électrique que visuel et dimensionnel, en usine et simplifie considérablement les opérations de montage sur le site.

L'invention concerne un dispositif de protection étanche pour une jonction de câbles haute tension, comportant une structure tubulaire métallique et une gaine isolante extérieure, constitué par un premier et un deuxième élément préfabriqué présentant une zone de raccordement étanche l'un à l'autre et comportant chacun au moins un premier tube et une enveloppe préformée extérieure solidaire de chaque tube de ce même élément préfabriqué, les tubes desdits éléments préfabriqués assemblés constituant ensemble ladite structure tubulaire métallique et leurs enveloppes préformées respectives étant couplées de façon étanche l'une à l'autre dans ladite zone de raccordement et constituant ainsi ladite gaine isolante extérieure.

Un dispositif de protection de ce type est décrit dans le document de brevet US 1 723 846.

L'invention permet de réaliser des moyens de raccordement de câbles extérieurs au niveau d'un tel dispositif de protection.

Selon l'invention, le premier tube dudit premier élément préfabriqué est unique dans celui-ci et présente deux tronçons cylindriques circulaires de diamètre différent l'un de l'autre et un tronçon conique entre eux, et le deuxième élément préfabriqué comporte ledit premier tube de celui-ci et un deuxième tube, tous deux cylindriques mais de diamètre différent l'un de l'autre, montés sensiblement à la suite l'un de l'autre, isolés l'un de l'autre et portant tous deux ladite enveloppe préformée de ce deuxième élément préfabriqué.

Avantageusement, ledit premier et ledit deuxième tube dudit deuxième élément préfabriqué ont deux extrémités en vis-à-vis, qui présentent chacune un prolongement conique de même angle et ménagent un espace entre elles.

Dans ce cas, l'espace entre les deux tubes métalliques du deuxième élément est de préférence rempli par un matériau isolant.

Par ailleurs, les deux tubes sont respectivement associés à des moyens de raccordement à des câbles extérieurs de mise à une terre locale de chacun d'eux ou de permutation d'écrans.

La présente invention et ses avantages seront mieux compris en référence à la description d'exemples de réalisation non limitatifs et aux dessins annexés dans lesquels :
- la figure 1 est une vue d'ensemble d'une première forme de réalisation du dispositif de protection étanche d'une jonction de câbles haute tension selon l'invention,
- la figure 2 est une vue en coupe agrandie du premier élément du dispositif selon la figure 1,

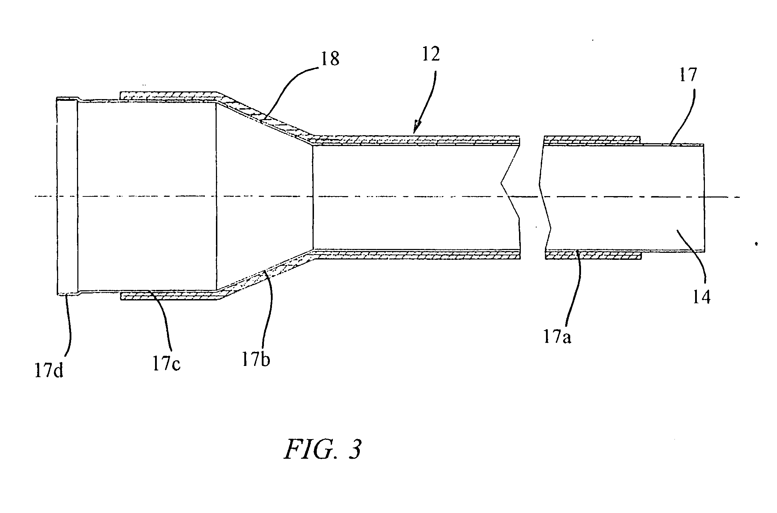

- la figure 3 est une vue en coupe agrandie du deuxième élément du dispositif selon la figure 1,
- la figure 4 est une vue d'ensemble d'une seconde forme de réalisation du dispositif de protection étanche d'une jonction de câbles haute tension selon l'invention, et
- la figure 5 est une vue en coupe agrandie du deuxième élément du dispositif selon la figure 4.

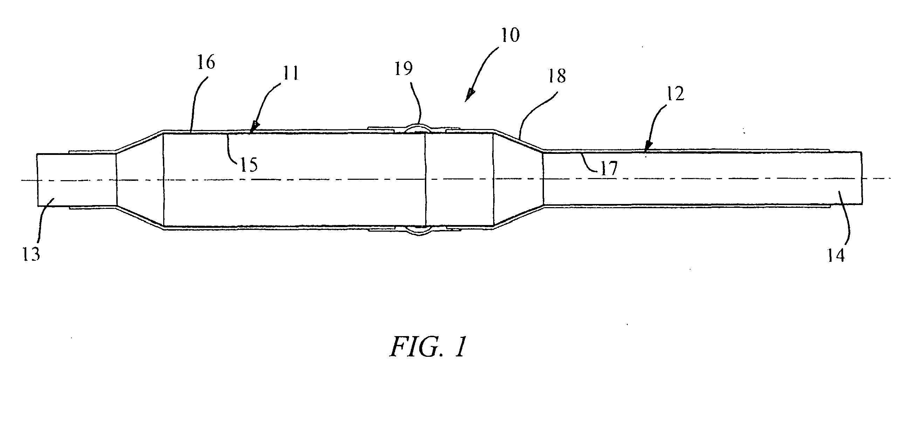

En référence aux figures et en particulier à la figure 1, le dispositif de protection étanche pour une jonction de câbles haute tension 10 se compose principalement de deux éléments 11 et 12 qui sont respectivement montés sur deux câbles 13 et 14 dont on assure la jonction au moyen d'un corps de jonction préfabriqué qui n'est ni représenté ni décrit, car il ne fait pas partie de la présente invention. Les deux éléments 11 et 12 sont assemblés de façon étanche selon un procédé qui sera décrit par la suite.

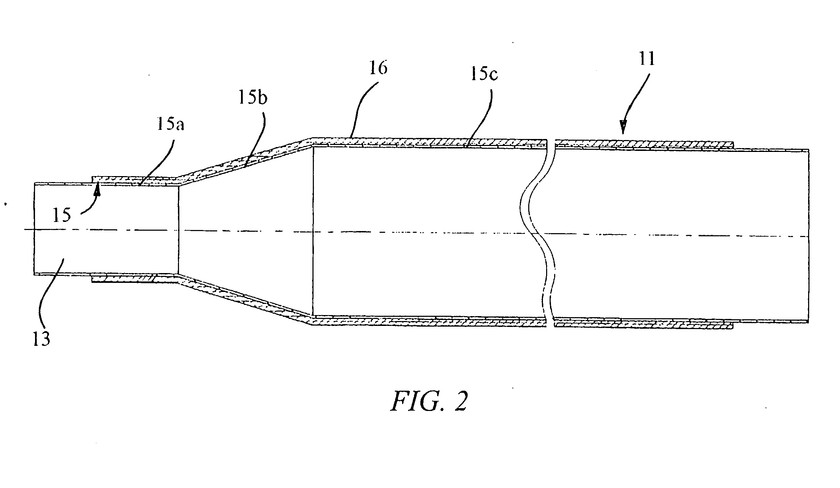

L'élément 11 est représenté agrandi par la figure 2. Il se compose principalement d'un tube en cuivre 15 et d'une enveloppe de protection 16 réalisée en une matière synthétique isolante, qui recouvre au moins partiellement le tube en cuivre 15. Ce tube 15 se compose d'une partie 15a cylindrique de section circulaire, d'une longueur telle qu'elle permette de recouvrir et de protéger la partie du câble qu'il a été nécessaire de dénuder pour son parcage pendant l'opération de raccordement des conducteurs dans le corps de jonction préfabriqué. Le diamètre de cette partie est adapté au diamètre du câble 13. Cette partie est prolongée par une deuxième partie de forme conique 15b et par une troisième partie cylindrique circulaire 15c de diamètre supérieur à celui de la première partie 15a et qui s'adapte au diamètre extérieur du corps de jonction.

Le tube de cuivre 15 est de préférence fabriqué à l'aide de tôles en cuivre roulées et soudées ou sous forme d'une pièce tubulaire mise en forme par un procédé d'usinage approprié quelconque.

L'enveloppe de protection 16 est de préférence fabriquée selon un procédé de rotomoulage, toutefois, d'autres procédés tels que notamment le moulage par soufflage pourraient, le cas échéant, être utilisés. L'enveloppe 16 est glissée à chaud sur le tube en cuivre 15, ce qui permet d'assurer un serrage suffisant pour qu'elle ne bouge plus par rapport à ce tube, même lorsqu'elle s'échauffe à la température maximale de service de la jonction.

La longueur totale de l'élément 11 est adaptée à la longueur de l'élément 12 et les deux éléments qui constituent le dispositif de protection ont une longueur adaptée à celle du corps de jonction.

L'élément 12 est constitué d'un tube en cuivre et d'une enveloppe de protection 18, réalisée en une matière synthétique isolante, qui recouvre en partie le tube en cuivre 17. Ce tube comprend, comme l'élément 11, une partie cylindrique circulaire 17a qui a un diamètre équivalent à celui du câble 14, une partie conique 17b qui prolonge la partie 17a, et une partie cylindrique circulaire 17c qui prolonge la partie conique 17b. La partie cylindrique 17c comporte un évasement 17d à son extrémité libre, qui permet un emboîtement par rapport à l'extrémité libre de la partie cylindrique de diamètre élargi 15c de l'élément 11.

Comme pour l'élément 11, le tube en cuivre 17 de l'élément 12 est recouvert d'une enveloppe de protection 18, de préférence réalisée par rotomoulage qui s'adapte au profil du tube en cuivre 17 qu'elle enserre de manière à empêcher tout déplacement relatif entre elle et ce tube, même à la température de service maximale de la jonction.

Le tube en cuivre peut être fabriqué par formage ou usinage ou par enroulement de tôles qui sont ensuite soudées.

L'assemblage et le raccordement des deux éléments s'effectue par emboîtement des deux tubes en cuivre 15 et 17 au niveau de l'évasement 17d, suivi d'une soudure de ces deux tubes de cuivre. Le raccordement étanche des deux enveloppes isolantes 16 et 18 s'effectue de préférence au moyen d'une pièce rapportée 19 qui assure un pontage surmontant la zone de soudure des deux tubes en cuivre 15 et 17. Cette pièce est de préférence thermo-soudée aux deux enveloppes isolantes. Toutefois, elle pourrait également être collée ou reconstituée sur place, au moyen de matières synthétiques appropriées.

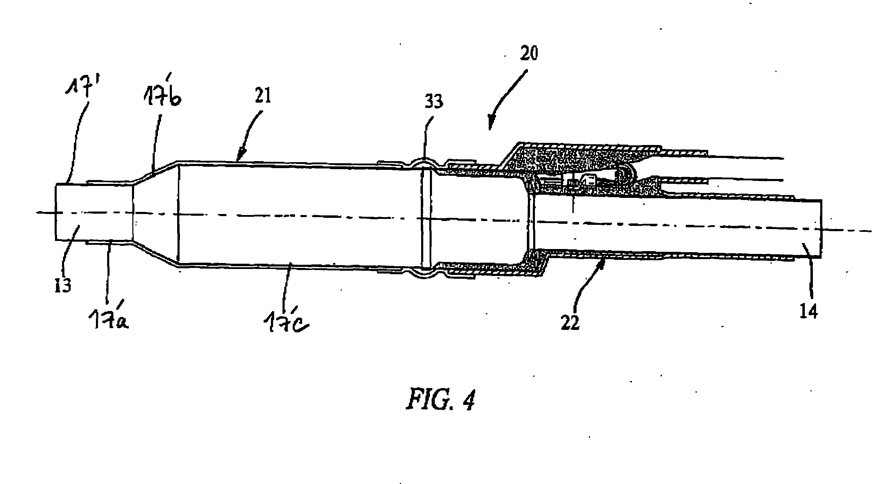

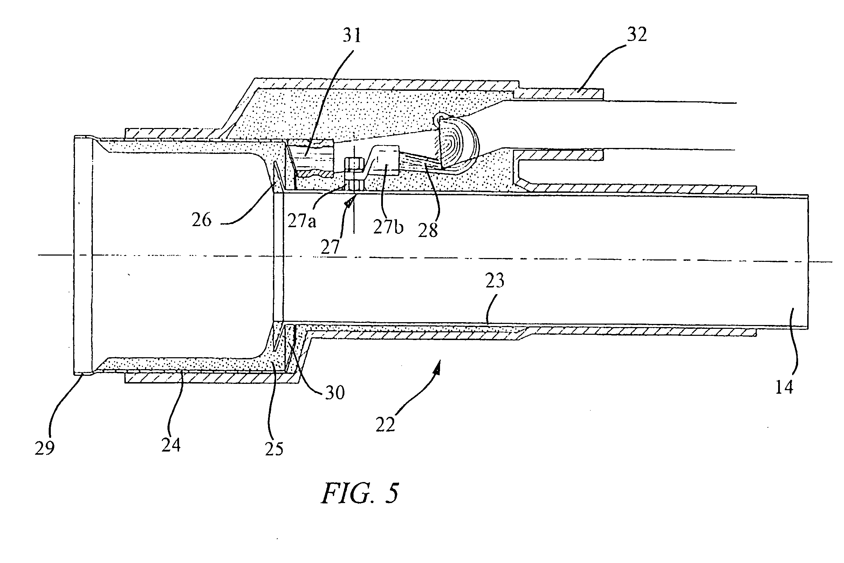

La figure 4 illustre une variante de réalisation d'un dispositif de protection étanche d'une jonction de câbles haute tension. Selon cette variante, le dispositif 20 comporte principalement deux éléments 21 et 22 assemblés et montés respectivement sur les deux câbles 13 et 14 dont la jonction est faite au moyen d'un corps de jonction (non représenté). Dans cette réalisation, l'élément 21 est identique à l'élément 11 décrit précédemment. En revanche, l'élément 22 diffère de l'élément 12. Il est représenté agrandi par la figure 5. Cet élément 22 comporte deux tubes en cuivre cylindriques 23 et 24, isolés entre eux par une couche de matière synthétique moulée 25. Ces tubes sont connectés à un ou deux câbles extérieurs par des moyens de raccordement incorporés à l'élément, pour leur mise à une terre locale ou une permutation d'écrans. Le premier tube 23 a un diamètre adapté au diamètre extérieur du câble 14 à raccorder et sa longueur est telle que la protection de la partie du câble qu'il est nécessaire de dénuder pour son parcage pendant l'opération de raccordement des conducteurs, soit assurée. Ce tube est pourvu, à l'une de ses extrémités, d'un prolongement conique ouvert 26. Il est en outre équipé de moyens de raccordement 27 d'un ou de deux câbles extérieurs 28. Ces moyens de raccordement sont constitués, par exemple, d'une vis de serrage 27a et d'un dispositif serre-câble 27b connus en soi. Ces moyens de raccordement pourraient également être constitués par une soudure.

Le second tube 24 a un diamètre adapté à celui du corps de jonction, qui est supérieur à celui du câble 14. Une de ses extrémités est terminée par un évasement 29 destiné à coopérer avec l'extrémité du tube en cuivre de l'élément 21 pour assurer une superposition et une soudure des deux tubes. L'autre extrémité se prolonge par une partie conique 30 dirigée vers l'axe du dispositif, dont l'angle est identique à celui du prolongement conique ouvert 26 du premier tube 23. Il comporte également un moyen de raccordement à un câble extérieur 31, du type serre-câble ou similaire, pour assurer le raccordement à une terre locale ou assurer une permutation d'écrans. Les deux parties coniques 26 et 30 des deux tubes 23 et 24 se superposent. Les tubes 23 et 24 sont de préférence fabriqués au moyen de tôles roulées et soudées, mais pourraient également être faits par usinage ou tout autre moyen approprié.

Les tubes sont recouverts, au moins partiellement, par une enveloppe isolante 32 en matière synthétique, de préférence rotomoulée. Comme précédemment, elle est avantageusement glissée à chaud sur les tubes en cuivre pour qu'elle assure un serrage suffisant pour éviter tout déplacement relatif.

L'enveloppe constitue le moule pour la matière isolante de remplissage, qui constitue la couche de matière synthétique moulée 25 et protège également le système de connexion des écrans.

Lorsque les deux éléments 21 et 22 sont emboîtés, la zone de raccordement soudée des deux tubes en cuivre est recouverte et protégée par une isolation reconstituée qui peut être constituée par une pièce rapportée 33 thermo-soudée aux deux enveloppes isolantes associées aux deux tubes en cuivre. Cette isolation peut également être constituée par un rubannage de mastic et/ou une gaine thermorétractable.

D'autre variantes dérivant des réalisations présentes pourraient être développées. En particulier le nombre de tubes métalliques n'est pas obligatoirement limité à deux et les tronçons cylindriques et coniques d'un tube pourraient par exemple être noyés dans une masse isolante. Ces tubes pourraient également être réalisés en aluminium ou en alliages d'aluminium.

## Revendications

1. Dispositif de protection étanche pour une jonction de câbles haute tension, comportant une structure tubulaire métallique et une gaine isolante extérieure, constitué par un premier et un deuxième élément préfabriqué (21, 22) présentant une zone de raccordement étanche l'un à l'autre et comportant chacun au moins un premier tube (24) et une enveloppe préformée extérieure (32) solidaire de chaque tube de ce même élément préfabriqué, les tubes desdits éléments préfabriqués assemblés constituant ensemble ladite structure tubulaire métallique et leurs enveloppes préformées respectives étant couplées de façon étanche l'une à l'autre dans ladite zone de raccordement et constituant ainsi ladite gaine isolante extérieure, **caractérisé en ce que** le premier tube (17') dudit premier élément préfabriqué (21) est unique dans celui-ci et présente deux tronçons cylindriques circulaires (17'a, 17'c) de diamètre différent l'un de l'autre et un tronçon conique (17'b) entre eux, et le deuxième élément préfabriqué (22) comporte ledit premier tube (24) de celui-ci et un deuxième tube (23), tous deux cylindriques mais de diamètre différent l'un de l'autre, montés sensiblement à la suite l'un de l'autre, isolés l'un de l'autre et portant tous deux ladite enveloppe préformée (32) de ce deuxième élément préfabriqué.

2. Dispositif de protection étanche selon la revendication 1, **caractérisé en ce que** ledit premier et ledit deuxième tubes (24, 23) dudit deuxième élément préfabriqué (22) ont deux extrémités en vis-à-vis, présentant chacune un prolongement conique (26, 30) de même angle et ménageant un espace entre elles.

3. Dispositif de protection étanche selon la revendication 2, **caractérisé en ce que** l'espace entre lesdits premier et deuxième tubes (23, 24) du deuxième élément (22) est rempli par un matériau isolant.

4. Dispositif de protection étanche selon l'une des revendications précédentes, **caractérisé en ce que** lesdits premier et deuxième tubes (23, 24) dudit deuxième élément préfabriqué (22) sont respectivement associés à des moyens de raccordement (27, 31) de câbles extérieurs pour une mise à une terre locale de chacun d'eux ou une permutation d'écrans.

## Claims

1. A sealed protective device for a junction of high voltage cables, including a metal tubular structure and an outer insulating sheath, consisting of a first and a second prefabricated element (21, 22) having a sealed area for connecting them to each other and each including at least a first tube (24) and an outer preformed envelope (32) integral with each tube of this same prefabricated element, the tubes of said assembled prefabricated elements forming together said metal tubular structure and their respective preformed envelopes being sealably coupled with each other in said connecting area and thereby forming said outer insulating sheath, **characterized in that** the first tube (17) of said first prefabricated element (21) is single in the latter, and has two circular cylindrical sections (17'a, 17'c) with diameters different from each other and a tapered section (17'b) between them, and the second prefabricated element (22) includes said first tube (24) of the latter and a second tube (23), both cylindrical but with diameters different from each other, substantially mounted following each other, isolated from each other, and both bearing said preformed envelope (32) of this second prefabricated element.

2. The sealed protective device according to claim 1, **characterized in that** said first and second tubes (24, 23) of said second prefabricated element (22) have two facing ends, each having a tapered extension (26, 30) with the same angle and providing a gap between them.

3. The sealed protective device according to claim 2, **characterized in that** the gap between said first and second tubes (23, 24) of the second element (22) is filled with insulating material.

4. The sealed protective device according to any of the preceding claims, **characterized in that** said first and second tubes (23, 24) of said second prefabricated element (22) are respectively associated with means (27, 31) for connecting outer cables for locally grounding each of them or for switching shields.

## Patentansprüche

1. Abgedichtete Schutzvorrichtung für eine Hochspannungskabelverbindung mit einer röhrenförmigen Metallstruktur und einem äußeren Isoliermantel, welche aus einem ersten und einem zweiten vorgefertigtem Element (21, 22) gebildet ist, die eine abgedichtete Verbindungszone zueinander aufweisen und jeweils wenigstens ein erstes Rohr (24) und eine vorgeformte Außenhülle (32), die mit jedem Rohr des gleichen vorgefertigten Elements fest zusammengebaut ist, wobei die Rohre der vorgefertigten Elemente, wenn sie zusammengebaut sind, gemeinsam die rohrförmige Metallstruktur bilden, und wobei ihre jeweiligen vorgeformten Hüllen dicht miteinander in der Verbindungszone verbunden sind und so den äußeren Isoliermantel bilden, **dadurch gekennzeichnet, dass** das erste Rohr (17') des ersten vorgefertigten Elements (21) einzig in diesem ist und zwei ringförmige zylindrische Teilabschnitte (17'a, 17'c) mit voneinander verschiedenem Durchmesser und einen konischen Teilabschnitt (17'b) zwischen diesen aufweist, und das zweite vorgefertigte Element (22) dessen erstes Rohr (24) und ein zweites Rohr (23) aufweist, die beide zylindrisch sind, aber einen voneinander verschiedenen Durchmesser aufweisen, die im Wesentlichen hintereinander befestigt sind, voneinander isoliert sind und alle beide die vorgeformten Hülle (32) des zweiten vorgefertigten Elements tragen.

2. Abgedichtete Schutzvorrichtung gemäß Anspruch 1, **dadurch gekennzeichnet, dass** das erste und das zweite Rohr (24, 23) des zweiten vorgefertigten Elements (22) zwei gegenüberliegende Enden aufweisen, welche jeweils eine konische Verlängerung (26, 30) mit gleichem Winkel darstellen und einen Platz zwischen sich vorsehen.

3. Abgedichtete Schutzvorrichtung gemäß Anspruch 2, **dadurch gekennzeichnet, dass** der Platz zwischen dem ersten und zweiten Rohr (23, 24) des zweiten Elements (22) mit einem Isoliermaterial gefüllt ist.

4. Abgedichtete Schutzvorrichtung gemäß einem der vorausgegangenen Ansprüche, **dadurch gekennzeichnet, dass** das erste und zweite Rohr (23, 24) des zweiten vorgefertigten Elements (22) jeweils mit Verbindungsmitteln (27, 31) für außenliegende Kabel verbunden ist zum Anbringen an eine für jeden von ihnen lokale Erde oder einen Austausch von Abschirmungen.
